# FASCICULE DE BREVET EUROPEEN

(11) **EP 0 876 921 B1**
(45) Date de publication et mention de la délivrance du brevet: **19.09.2001**
(21) Numéro de dépôt: 98400878.9
(22) Date de dépôt: 09.04.1998
(51) Int. Cl.: B41J 3/60, H04N 1/21

(54) **Procédé d'impression recto verso dans une imprimante et télécopieur pour la mise en oeuvre du procédé**
Verfahren zum beidseitigen Drucken in einem Drucker und Faksimile-Gerät zur Durchführung des Verfahrens
Method for duplex printing in a printer and facsimile apparatus for carrying out the method

(30) Priorité: 06.05.1997 FR 9705542
(43) Date de publication de la demande: 11.11.1998
(73) Titulaire: SAGEM SA, 75116 Paris (FR)
(72) Inventeur: Nauche, Gilles, 92400 Courbevoie (FR); Chevrollier, Guy, 95740 Frepillon (FR); Leylde, Philippe, 95800 Cergy Le Haut (FR)
(74) Mandataire: Bloch, Gérard

(56) Documents cités:
- EP-A- 0 383 577
- EP-A- 0 700 788
- DE-U- 9 017 160
- FR-A- 2 643 170
- PATENT ABSTRACTS OF JAPAN vol. 18, no. 608 (E-1633), 18 novembre 1994 & JP 06 233091 A (RICOH CO LTD), 19 août 1994,
- PATENT ABSTRACTS OF JAPAN vol. 15, no. 191 (E-1068), 16 mai 1991 & JP 03 049363 A (NEC CORP), 4 mars 1991,
- PATENT ABSTRACTS OF JAPAN vol. 17, no. 32 (E-1309), 21 janvier 1993 & JP 04 252662 A (MURATA MACH LTD), 8 septembre 1992,
- PATENT ABSTRACTS OF JAPAN vol. 96, no. 10, 31 octobre 1996 & JP 08 167953 A (CANON INC), 25 juin 1996,

## Description

Les télécopieurs pourvus d'une imprimante destinée à imprimer des documents de télécopie transmis et reçus, ne peuvent imprimer les documents que sur l'une seule des deux faces recto et verso de feuilles supports d'impression, généralement en papier. De ce fait, les télécopieurs consomment une quantité excessive de papier.

Un procédé qui vise à pallier cet inconvénient est montré dans l'abrégé en anglais du document JP-A-06 233 091 qui montre un procédé pour imprimer respectivement une succession de pages sur les recto et verso d'au moins un support d'impression, au cours duquel, on compte le nombre de pages de la succession de pages, afin d'en déduire la parité de ce nombre, on prend successivement chacun des supports à imprimer, et on décide de l'imprimer au recto et au verso, soit directement, si ladite parité est paire, soit, si elle est impaire, après avoir imprimé l'une seule des deux faces de la première page.

L' invention concerne un procédé pour imprimer respectivement une succession de pages sur les recto et verso d'au moins un support d'impression, au cours duquel, on compte le nombre de pages de la succession de pages, afin d'en déduire la parité de ce nombre, et un nombre de supports d'impression nécessaires pour imprimer recto verso la succession de pages, on prend successivement chacun des supports à imprimer, on lui attribue un numéro d'ordre, et on décide de l'imprimer au recto et au verso, soit directement, si ladite parité est paire, soit, si elle est impaire, après avoir vérifié, en les comparant, que le numéro du support et le nombre de supports nécessaires sont différents.

Avantageusement, au cours de l'impression d'un dernier support, on décide d'imprimer l'une seule des deux faces dudit support après avoir déterminé que la parité est impaire, et le numéro du support égal au nombre de supports à imprimer.

Avantageusement encore, après chaque impression d'un support d'impression, on compare le numéro d'ordre du support imprimé au nombre de supports à imprimer, et s'ils sont différents on procède à une nouvelle impression de support.

Dans un mode de mise en oeuvre préféré de l'invention, au cours de l'impression recto verso d'un support, on imprime en continu les deux faces recto et verso du support d'impression.

L'invention concerne aussi un télécopieur à impression recto verso sur au moins un support d'impression d'un document de télécopie comprenant une succession de pages pour la mise en oeuvre du procédé ci-dessus, comprenant un module d'impression, un chemin de retournement du support d'impression et des moyens d'entraînement du support d'impression le long du chemin de retournement, caractérisé par le fait que le chemin de retournement comprend un brin d'impression, un brin de retour et un brin de va-et-vient, reliés en un point commun de jonction, les moyens d'entraînement étant agencés pour entraîner le support d'impression en déplacement dans un sens aller le long du brin d'impression et du brin de va-et-vient puis dans le sens retour le long du brin de va-et-vient et le long du brin de retour.

L'invention sera mieux comprise à l'aide de la description suivante de deux formes de réalisation du télécopieur de l'invention, et de deux modes de mise en oeuvre du procédé d'impression de l'invention, en référence aux dessins annexés sur lesquels:
- la figure 1 représente une vue schématique de l'unité d'impression de l'une des formes de réalisation du télécopieur de l'invention;
- la figure 2 représente un organigramme de l'un des modes de mise en oeuvre du procédé d'impression correspondant au fonctionnement du télécopieur de la figure 1;
- la figure 3 représente une vue schématique de l'unité d'impression d'une autre forme de réalisation du télécopieur; et
- la figure 4 représente un organigramme d'un autre mode de mise en oeuvre du procédé d'impression, correspondant au fonctionnement du télécopieur de la figure 3.

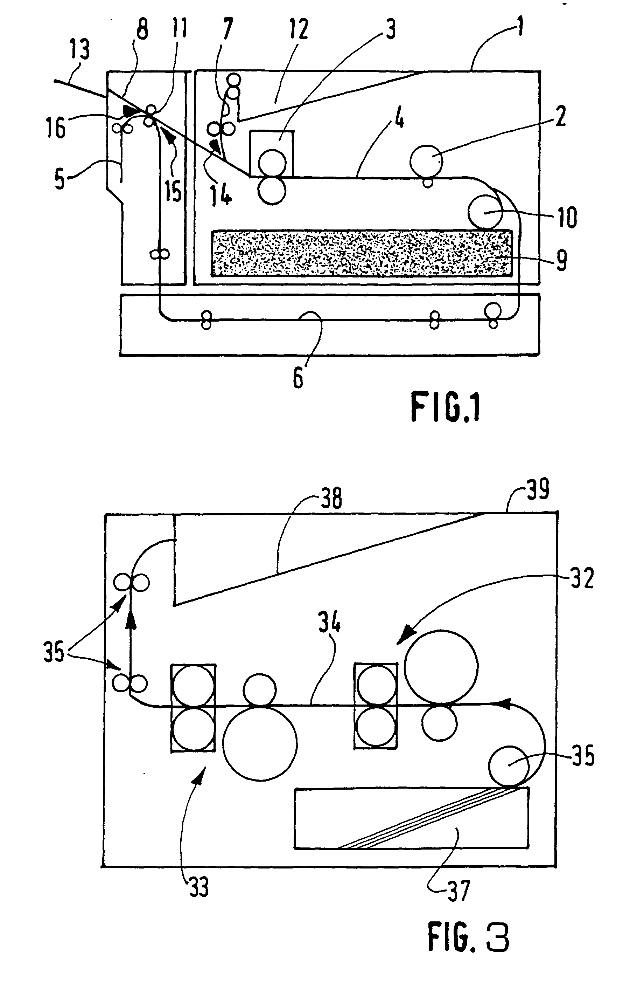

Le télécopieur, de la figure 1 est relié à une pluralité de télécopieurs distants, via un réseau de communication, et peut émettre des télécopies vers un télécopieur distant, ou en recevoir depuis un télécopieur distant avant de les imprimer.

Par souci de clarté, seuls les éléments du télécopieur relatifs à la réception et à l'impression seront décrits.

Le télécopieur comprend, de façon classique:
- un bloc de réception de télécopie, relié au réseau de communication;
- une mémoire de télécopies reçues reliée au bloc de réception ; et
- une unité d'impression 1.

En outre, le télécopieur intègre une interface homme-machine et une unité centrale destinée à commander le fonctionnement des éléments du télécopieur.

L'unité d'impression 1 comporte un module d'impression 2, en l'espèce un module d'impression laser, un four 3 de fixation de toner d'impression, un mécanisme de retournement et d'éjection de support d'impression, et deux réceptacles de supports imprimés 12, 13.

Le mécanisme de retournement et d'éjection comprend :
- un chemin de retournement de support comportant un brin d'impression 4, un brin de va-et-vient 5, et un brin de retour 6, et
- deux branches 7, 8 d'éjection de support.

Le brin d'impression 4 et le brin de retour 6 forment une boucle fermée.

Le brin de va-et-vient 5 présente un point commun 11 de jonction au brin d'impression 4 et au brin 6 de retour.

Le module d'impression laser 2 et son four de fixation 3 sont disposés le long du brin d'impression 4, l'un à la suite de l'autre dans le sens d'entraînement. Le module d'impression laser 2 communique en entrée avec un magazin 9 d'alimentation en supports d'impression par l'intermédiaire d'un rouleau d'entraînement 10.

L'une 7 des branches d'éjection de support relie un point du brin d'impression 4, situé en aval du four de fixation 3 et en amont du point de jonction 11, à l'un des réceptacles 12 dans lequel les supports sont éjectés avec retournement.

L'autre branche d'éjection 8 relie le point commun de jonction 11 à l'autre réceptacle 13 d'éjection directe, sans retournement.

Cette branche d'éjection 8 s'étend dans le prolongement du brin d'impression 4.

Une pluralité d'aiguilles d'aiguillage, ici trois 14, 15, 16 destinées à orienter les supports d'impression lors de leur entraînement, sont disposées respectivement entre le brin d'impression 4 et la branche 7 d'éjection avec retournement, entre le brin d'impression 4 et le brin de retour 6, et entre le brin de va-et-vient 5 et la branche d'éjection directe 8. Chaque aiguille, positionnée à une bifurcation entre deux chemins possibles, peut être déplacée entre deux positions permettant respectivement de bloquer l'un des deux chemins en libérant l'autre et inversement.

Une pluralité de systèmes d'entraînement à galets sont disposés respectivement le long du brin d'impression 4, du brin de va-et-vient 5, du brin de retour 6, de la branche d'éjection avec retournement 7, et à la jonction commune 11.

Le rouleau 10 d'amenée de support d'impression, les aiguilles d'aiguillage 14, 15, 16 et les différents systèmes d'entraînement de support sont reliés à l'unité centrale destinée à commander leur fonctionnement.

L'interface homme-machine comprend un sélecteur de réceptacle pour sélectionner l'éjection des supports imprimés dans l'un des deux réceptacles 12, 13 et donc avec ou sans retournement.

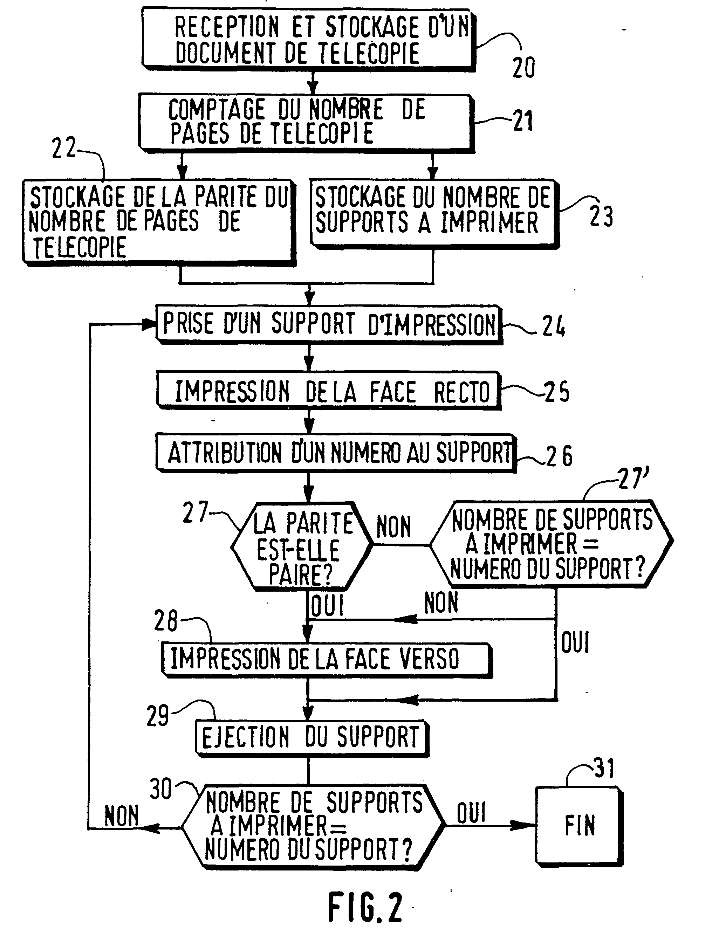

L'unité centrale intègre une mémoire de parité, une mémoire d'impression, une mémoire d'ordre, un comparateur relié en entrée aux deux mémoires d'impression et d'ordre, et un programme d'exécution du procédé d'impression de la figure 2 correspondant au fonctionnement du télécopieur pour l'impression d'un document de télécopie.

L'impression d'un document de télécopie va maintenant être décrite.

Un utilisateur sélectionne au préalable l'un des deux réceptacles d'éjection 12 et 13, à l'interface homme-machine.

Lorsqu'un document de télécopie est reçu par le bloc de réception du télécopieur, il est stocké 20 dans la mémoire de télécopies.

Le document de télécopie comprend une succession de pages à imprimer respectivement au recto et au verso d'au moins un support d'impression.

L'unité centrale, dans une étape initiale, compte 21 le nombre total N de pages du document de télécopie afin d'en déduire la parité de ce nombre et le nombre de supports d'impression nécessaires pour imprimer toutes les pages du document.

La parité du nombre total de pages à imprimer et le nombre de supports à imprimer sont respectivement stockés 22, 23 dans la mémoire de parité et la mémoire d'impression.

Après l'étape initiale, l'unité centrale commande une première étape d'impression. Le module d'impression prend 24 un premier support d'impression, dans le magasin d'alimentation 9, par l'intermédiaire du rouleau d'amenée 10, et imprime 25 la première page de la succession de pages du document de télécopie sur l'une des deux faces du support d'impression, ici au recto.

L'unité centrale attribue 26 un numéro d'ordre au support d'impression, qui est ici le numéro un, en incrémentant d'une unité le contenu de la mémoire d'ordre, initialement mis à zéro.

Puis l'unité centrale lit 24 la parité du nombre de pages à imprimer dans la mémoire de parité.

Si la parité est paire, l'unité centrale décide directement d'imprimer 28 la page suivante du document au verso du support.

Si la parité est impaire, le comparateur compare d'abord le nombre de supports à imprimer au numéro d'ordre du support en cours d'impression, et s'ils sont différents l'unité centrale décide d'imprimer 28 la page suivante du document au verso du support. Le cas où les deux nombres sont égaux 27' sera explicité plus loin.

Pour l'impression du verso du support en cours d'impression, ce dernier doit être retourné entre les deux impressions successives de ses deux faces par le module d'impression laser.

Les aiguilles 14, 15, 16 sont d'abord positionnées de façon à libérer le passage le long du brin d'impression 4 et du brin de va-et-vient 5, et à bloquer les passages vers les branches d'éjection 7, 8. Les systèmes à galets des brins d'impression 4 et de va-et-vient 5 sont alors mis en marche, dans un sens aller, afin d'entraîner le support d'impression depuis le module d'impression 2 dans le brin de va-et-vient 5. Puis, l'aiguille 15 change de position pour bloquer le passage du brin de va-et-vient 5 vers le brin d'impression 4 et pour libérer le passage du brin de va-et-vient 5 vers le brin de retour 6. Les systèmes à galets du brin de va-et-vient 5 et du brin de retour 6 sont alors mis en marche dans le sens retour. Le support d'impression est donc entraîné, dans le sens aller, le long du brin d'impression 4 et du brin de va-et-vient 5 puis, dans le sens retour, le long du brin de va-et-vient 5 et le long du brin de retour 6. Grâce au va-et-vient dans le brin de va-et-vient 5, le support d'impression, sortant du module d'impression 2 dans une position donnée, revient dans le module d'impression 2 dans une position retournée.

Le module d'impression 2 imprime la seconde page du document de télécopie au verso du support.

Après l'impression recto verso du support, ce dernier est éjecté 29 dans le réceptacle 12 ou 13 sélectionné par l'utilisateur, l'aiguille correspondante 14 ou 16 changeant de position afin de libérer le passage entre le brin d'impression 4 et la branche d'éjection 7 ou 8 du réceptacle sélectionné 12 ou 13.

Dans le cas 27' où la parité est impaire et le numéro du support égal au nombre de supports à imprimer, le support d'impression est éjecté 29 directement sans impression au verso, la dernière page du document de télécopie venant d'être imprimée au recto du support.

Après l'éjection 29 du support imprimé, le comparateur compare 30 le nombre de supports à imprimer et le numéro d'ordre du support imprimé et éjecté.

S'ils sont différents, l'unité centrale commande l'impression d'un nouveau support, comme cela vient d'être décrit afin d'imprimer les pages suivantes du document de télécopie.

S'ils sont égaux, l'unité centrale décide d'arrêter l'impression 31, toutes les pages du document ayant été imprimées.

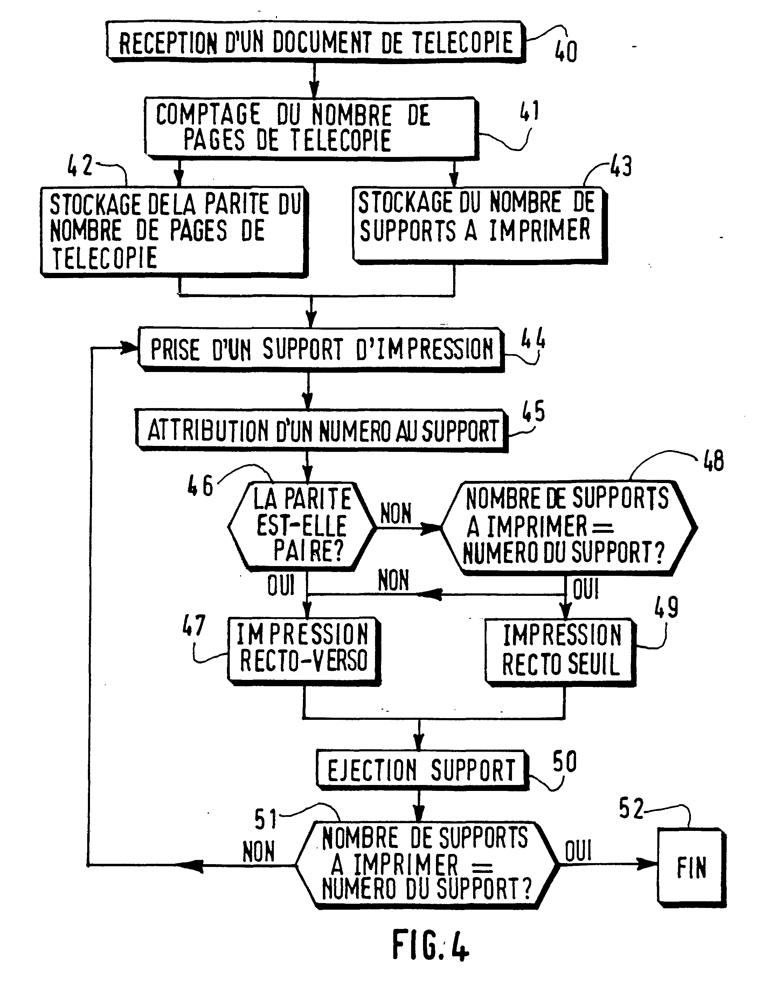

Une autre forme de réalisation de télécopieur, représentée sur la figure 3, ne diffère du télécopieur décrit ci-dessus que par les éléments qui vont maintenant être décrits.

Le télécopieur comprend un bloc de réception de télécopie, une mémoire de télécopies, une unité d'impression 39, une interface homme-machine et une unité centrale.

L'unité d'impression 39 comprend un magasin 37 d'alimentation en supports d'impression, un réceptacle de sortie 38 et deux modules d'impression 32, 33 disposés de part et d'autre d'une surface d'entraînement 34, en l'espèce un plan d'entraînement.

Les deux modules d'impression 32, 33 sont destinés à imprimer en continu par balayage le long de deux lignes d'impression respectives contenues dans le plan d'entraînement, deux pages successives d'un document de télécopie au recto et au verso d'un support d'impression, respectivement.

L'un des modules d'impression 32 est disposé en amont de l'autre module d'impression 33 dans le sens d'entraînement, les deux lignes d'impression respectives des deux modules 32, 33 étant décalées l'une de l'autre. Le module amont 32 communique en amont avec le magasin d'alimentation 37 et l'autre module aval 33 communique en aval avec le réceptacle 32.

Deux systèmes 35, 36 d'entraînement de support d'impression, amont et aval, sont intercalés respectivement entre le magasin d'alimentation 37 et le module d'impression amont 32, et entre le module d'impression aval 33 et le réceptacle 38.

L'unité centrale intègre une mémoire de parité, une mémoire d'impression, une mémoire d'ordre, un calculateur relié à ces deux dernières mémoires, et un programme d'exécution du procédé d'impression de la figure 4 correspondant sensiblement au fonctionnement du télécopieur qui va maintenant être décrit.

Après la réception 40 d'un document de télécopie, l'impression du document comprend une étape initiale 41-43 telle que celle décrite précédemment, pour déduire la parité du nombre total de pages de document de télécopie à imprimer et le nombre de supports à imprimer, du nombre total de pages du document de télécopie.

Puis, le télécopieur procède à une succession d'étapes d'impression de support nécessaires pour imprimer tout le document de télécopie.

Au début de chaque étape d'impression d'un support d'impression, l'unité centrale décide d'imprimer le support soit sur ses deux faces recto et verso, soit sur l'une seule de ses deux faces.

Pour cela, le système d'entraînement prend 44 un support d'impression dans le magasin d'alimentation, l'unité centrale attribue 45 un numéro d'ordre au support d'impression, et lit 46 la parité du nombre de pages du document.

Si la parité est paire, l'unité centrale décide directement d'imprimer 47 les deux faces du support d'impression.

Si la parité est impaire, le comparateur compare d'abord 48 le numéro du support et le nombre de supports à imprimer. S'ils sont différents l'unité centrale décide d'imprimer 47 les deux faces du support d'impression, et s'ils sont égaux, le support étant le dernier à imprimer, l'unité centrale décide d'imprimer l'une seule des deux faces du support d'impression 49.

Pour l'impression recto verso du support, l'unité centrale commande la mise en marche des deux modules d'impression 32, 33.

Le support à imprimer est entraîné en translation dans le plan d'entraînement de l'amont vers l'aval.

Au cours de l'entraînement du support, les deux modules d'impression amont et aval 32, 33 impriment 47 en continu deux pages successives du document de télécopie, respectivement sur les faces recto et verso du support d'impression.

Puis le support est éjecté 50 dans le réceptacle 32.

Pour l'impression de l'une seule des deux faces du support, l'unité centrale commande la mise en marche du seul module d'impression amont 32 qui imprime 49 la dernière image du document de télécopie au recto du dernier support d'impression ensuite éjecté 50 dans le réceptacle 38.

Après chaque éjection 50 de support imprimé, le comparateur compare 51 le numéro du support éjecté et le nombre de supports à imprimer.

S'ils sont différents, l'unité centrale décide l'impression d'un nouveau support, et s'ils sont égaux l'unité centrale commande la fin de l'impression du document 52.

Il pourrait également être prévu dans l'interface homme-machine un autre sélecteur pour sélectionner soit une impression recto verso des supports, soit une impression de l'une seule des deux faces du support.

## Revendications

1. Procédé pour imprimer respectivement une succession de pages sur les recto et verso d'au moins un support d'impression, au cours duquel, on compte (21; 41) le nombre de pages de la succession de pages, afin d'en déduire la parité de ce nombre (22; 42) et un nombre de supports d'impression nécessaires pour imprimer recto verso la succession de pages (23; 43), on prend successivement (24; 44) chacun des supports à imprimer, on lui attribue un numéro d'ordre (26; 45), et on décide (27; 46) de l'imprimer au recto et au verso (25, 28; 47), soit directement, si ladite parité est paire, soit, si elle est impaire, après avoir vérifié, en les comparant (27'; 48), que le numéro du support et le nombre de supports nécessaires sont différents.

2. Procédé d'impression recto verso selon la révendication 1, dans lequel au cours de l'impression d'un dernier support, on décide d'imprimer (29; 49) l'une seule des deux faces dudit support après avoir déterminé que la parité est impaire (27; 46) et le numéro du support égal au nombre de supports à imprimer (27'; 48).

3. Procédé d'impression recto verso selon l'une des revendications 1 et 2, dans lequel après chaque impression d'un support d'impression, on compare le numéro d'ordre du support imprimé au nombre de supports à imprimer (30; 51) et, s'ils sont différents, on procède à une nouvelle impression de support.

4. Procédé d'impression recto verso selon l'une des revendications 1 à 3, dans lequel au cours de l'impression recto verso d'un support d'impression, on retourne ledit support entre les impressions de ses deux faces.

5. Procédé d'impression recto verso selon l'une des revendications 1 à 3, dans lequel au cours de l'impression recto verso d'un support, on imprime en continu les deux faces recto et verso du support d'impression.

6. Télécopieur à impression recto verso sur au moins un support d'impression d'un document de télécopie comprenant une succession de pages comprenant des moyens pour la mise en oeuvre du procédé selon l'une des revendications 1 à 4, comprenant un module d'impression (2), un chemin (4 - 6) de retournement du support d'impression et des moyens d'entraînement du support d'impression le long du chemin de retournement, dans lequel le chemin de retournement comprend un brin d'impression (4) un brin de retour (6) et un brin de va-et-vient (5), reliés en un point commun de jonction (11), les moyens d'entraînement étant agencés pour entraîner le support d'impression en déplacement dans un sens aller le long du brin d'impression (4) et du brin de va-et-vient (5) puis dans le sens retour le long du brin de va-et-vient (5) et le long du brin de retour (6).

7. Télécopieur selon la revendication 6, comprenant une branche (8) d'éjection directe du support d'impression et une branche (7) d'éjection avec retournement du support d'impression.

## Claims

1. Method for duplex printing respectively a succession of pages on both sides of at least one printing support in the course of which one counts (21 ; 41) the number of pages of the succession of pages in order to deduce from same the parity of this number (22 ; 42) and a number of printing supports necessary to print the succession of pages (23 ; 43) on both sides, one takes successively (24 ; 44) each of the supports to be printed, allocates to it a rank (26 ; 45), and decides (27 ; 46) to print it on both sides (25, 28 ; 47), either directly if said parity is even, or, if it is odd, after having checked, by comparing them (27' ; 48), that the rank of the support and the number of necessary supports is different.

2. Method for duplex printing according to claim 1, wherein during the printing of a last support, one decides to print (29 ; 49) solely one of the two faces of said support after having determined that the parity is odd (27 ; 46) and the rank of the support is equal to the number of supports to be printed (27' ; 48).

3. Method for duplex printing according to one of claims 1 and 2, wherein, after each printing of a support, the rank of the printed support is compared with the number of supports to be printed (30 ; 51) and, if they are different, one proceeds to new support printing.

4. Method for duplex printing according to one of claims 1 to 3, wherein, during the duplex printing of a support, said support is turned over between the printing of its two faces.

5. Method for duplex printing according to one of claims 1 to 3, wherein, during the duplex printing of a support, the two faces recto and verso of the support are printed in a continuous operation.

6. Facsimile apparatus for duplex printing on at least one printing support of a facsimile document comprising a succession of pages including means for implementing the method according to one of claims 1 to 4, comprising a printing module (2), a path (4-6) for turning over the printing support and means for driving the printing support along the turn-over path, wherein the turn-over path comprises a printing portion (4), a return portion (6) and a to-and-fro portion (5), connected at a common connection point (11), the drive means being arranged to drive the printing support by displacing it in a one way direction along the printing portion (4) and the to-and-fro portion (5) then in the return direction along the to-and-fro portion (5) and along the return portion (6).

7. Facsimile apparatus according to claim 6, comprising an ejection arm (8) for direct ejection of the substrate and an ejection arm (7) which also turns the substrate over.

## Patentansprüche

1. Verfahren zum Drucken jeweils einer Abfolge von Seiten auf die Vorderseite und die Rückseite wenigstens eines Druckträgers, in dessen Verlauf man die Anzahl der Seiten der Abfolge von Seiten zählt (21; 41), um daraus die Parität dieser Zahl herzuleiten (22; 42) und die Anzahl der zum beidseitigen Druck der Abfolge von Seiten benötigte Anzahl der Druckträger (23; 43), man nacheinander (24; 44) jeden zu bedruckenden Träger nimmt, ihm eine Ordnungsnummer zuweist (26; 45), und man dessen beidseitige Bedruckung (25, 28; 47) entweder direkt beschließt (27; 46), wenn die Parität gerade ist, oder, wenn sie ungerade ist, nachdem durch deren Vergleich (27'; 48) geprüft wurde, daß sich die Nummer des Trägers und die Anzahl der benötigten Träger unterscheiden.

2. Verfahren zum beidseitigen Bedrucken nach Anspruch 1, wobei man beim Bedrucken eines letzten Trägers beschließt (29; 49), nur eine der beiden Seiten dieses Trägers zu bedrucken, nachdem bestimmt wurde, daß die Parität ungerade (27; 46) und die Nummer des Trägers gleich der Anzahl der zu bedruckenden Träger ist (27'; 48).

3. Verfahren zum beidseitigen Bedrucken nach Anspruch 1 oder 2, wobei man nach jedem Bedrucken eines Druckträgers die Ordnungsnummer des bedruckten Trägers mit der Anzahl der zu bedruckenden Träger vergleicht (30; 51), und man mit dem Bedrucken eines neuen Trägers fortfährt, wenn sie sich unterscheiden.

4. Verfahren zum beidseitigen Bedrucken nach einem der Ansprüche 1 bis 3, wobei man beim beidseitigen Bedrucken eines Druckträgers den Träger zwischen dem Bedrucken seiner beiden Seiten umdreht.

5. Verfahren zum beidseitigen Bedrucken nach einem der Ansprüche 1 bis 3, wobei man beim beidseitigen Bedrucken eines Trägers fortlaufend beide Seiten, die Vorder- und Rückseite des Druckträgers bedruckt.

6. Telefaxgerät zum beidseitigen Bedrucken wenigstens eines Druckträgers mit einem eine Abfolge von Seiten enthaltenden Telefaxdokument, mit Mitteln zur Durchführung des Verfahrens nach einem der Ansprüche 1 bis 4, das ein Druckmodul (2) aufweist, eine Druckträgerwendebahn (4 - 6) und Mittel zum Antrieb des Druckträgers entlang der Wendebahn, wobei die Wendebahn einen Bedruckungsabschnitt (4), einen Rückführungsabschnitt (6) und einen Abschnitt (5) mit hin- und hergehender Bewegung aufweist, die über einen gemeinsamen Verbindungspunkt (11) verbunden sind, wobei die Antriebsmittel derart ausgebildet sind, daß sie den Druckträger in Hinrichtung entlang des Bedruckungsabschnitts (4) und des Abschnitts (5) mit hin- und hergehender Bewegung in Bewegung versetzen und dann in Rückrichtung entlang des Abschnittes (5) mit hin- und hergehender Bewegung und des Rückführungsabschnittes (6).

7. Telefaxgerät nach Anspruch 6, mit einem Zweig (8) zur direkten Ausgabe des Druckträgers und einem Zweig (7) zur mit einer Wendung verbundenen Ausgabe des Druckträgers.
